# EUROPÄISCHE PATENTSCHRIFT

(11) **EP 2 880 468 B1**
(45) Veröffentlichungstag und Bekanntmachung des Hinweises auf die Patenterteilung: **15.08.2018**
(21) Anmeldenummer: 13732139.4
(22) Anmeldetag: 26.06.2013
(51) Int. Cl.: G01V 8/20

(54) **LICHTGITTEREINRICHTUNG, LICHTGITTERSICHERUNGSVORRICHTUNG UND DAMIT VER-SEHENES AUTOMATISCH ANGETRIEBENES TOR**
LIGHT GRID UNIT, LIGHT GRID SECURING UNIT AND AUTOMATICALLY DRIVEN GATE PROVIDED THEREWITH
DISPOSITIF À GRILLE DE LUMIÈRE, DISPOSITIF DE SÉCURITÉ À GRILLE DE LUMIÈRE ET PORTAIL À ENTRAÎNEMENT AUTOMATIQUE ÉQUIPÉ DUDIT DISPOSITIF DE SÉCUITÉ À GRILLE

(30) Priorität: 06.08.2012 DE 202012102952 U; 13.09.2012 DE 202012103499 U; 11.01.2013 DE 102013100311
(43) Veröffentlichungstag der Anmeldung: 10.06.2015
(60) Teilanmeldung: 16180888.6
(73) Patentinhaber: Hörmann KG Antriebstechnik, 33803 Steinhagen (DE)
(72) Erfinder: SANKE, Michael, 33378 Rheda-Wiedenbrück (DE); ROBBEN, Michael, 33829 Borgholzhausen (DE); SCHÜTZ, Viktor, 33332 Gütersloh (DE); RAHE, Michael, 33803 Steinhagen (DE); FROBÖSE, Hans-Jürgen, 33775 Versmold (DE)
(74) Vertreter: Kastel, Stefan
(86) Internationale Anmeldenummer: PCT/EP2013/063384
(87) Internationale Veröffentlichungsnummer: WO 2014/023471

(56) Entgegenhaltungen:
- DE-A1-102005 003 794
- US-A1- 2003 116 697
- US-A1- 2011 023 364

## Beschreibung

Die Erfindung betrifft eine Lichtgittereinrichtung zum Bilden eines Lichtgitters, das zum Absichern eines automatisch angetriebenen Tores dienen soll. Weiter betrifft die Erfindung eine Lichtgittersicherungsvorrichtung mit einer solchen Lichtgittereinrichtung und ein automatisch angetriebenes Tor mit einer solchen Lichtgittereinrichtung.

Automatisch angetriebene Tore gibt es in vielen Konstruktionen und Ausführungen. Eine Torart, für die die Erfindung besonders gedacht und geeignet ist, ist das Sectionaltor, das einen aus mehreren gelenkig aneinander angelenkten Torlamellen gebildeten Torflügel aufweist, der in seitlichen Laufschienen, die an einer Zarge angebracht sind, geführt ist. Aber auch für andere Überkopf-Tore wie Rolltore, Schnelllauftore oder Hubtore ist das hier beschriebene Lichtgittersystem interessant.

Es ist bekannt, automatisch angetriebene Tore durch optische Sicherungselemente wie Lichtschranken abzusichern. Die Lichtschranken sollen dazu dienen, in den Torweg eines schließenden Tores eintretende Hindernisse zu erfassen, um dann den Schließvorgang anzuhalten und den Torflügel ein Stück zurück zu fahren. Einzelne Lichtschranken werden im Torweg nahe dem Boden angebracht. Nun gibt es aber auch bewegliche Hindernisse, die zuerst etwas oberhalb des Bodens in den Torweg eintreten. Als Beispiel sei ein Gabelstapler mit etwas angehobener Last benannt. Bei angehobener Last würde eine einzelne am Boden angebrachte Lichtschranke zunächst nicht unterbrochen, obwohl der Torweg bereits blockiert ist. Es ist daher insbesondere auf dem Gebiet von Industrietoren bekannt, automatisch angetriebene Tore mit Lichtgittern abzusichern. Es gibt auch bereits Lichtgittersysteme auf dem Markt erhältlich (z.B. von der Firma Telco, siehe www.telco.at), die zur Absicherung von Toren dienen. Ein weiteres Beispiel für eine vorbekannte Lichtgittersicherungsvorrichtung ist der Firmendruckschrift "Vario B - Schaltender Lichtvorhang für die Objekterkennung" der Firma Leuze Elektronik, verbreitet unter anderem über das Internet, heruntergeladen am 04. August 2012, bekannt. Es wird für weitere technische Einzelheiten solcher Lichtgitter auf diese Druckschrift verwiesen. Man kann sich die Lichtgitter als eine Art in Reihe entlang einer Sicherungsebene aufgereihter Lichtschranken vorstellen. Die mehreren Sender bzw. Empfänger sind in der Regel zusammen auf einer Platine untergebracht, die entsprechend länglich aufgebaut ist.

Aus der US 2003/0116697 A1 ist ein Lichtvorhang zum Einrichten einer Schutzzone bekannt. Der Lichtvorhang, auch Lichtgitter genannt, umfasst eine Profilschiene, in die ein Lichtgittersender oder Lichtgitterempfänger eingelassen ist. Die Profilschiene wird mittels eines verschiebbaren Halters an einem Untergrund festgelegt. Dringt ein Hindernis in die durch den Lichtvorhang erzeugte Schutzzone ein, wird ein Schaltereignis ausgelöst, das beispielsweise von einer Sicherheitsschaltung erfasst und verarbeitet werden kann.

In der DE 10 2005 003 794 A1 ist eine Lichtschrankenanordnung für ein Rolltor offenbart. Die Lichtschranken sind entlang der Bewegungsrichtung des Rolltores angeordnet. Beim Bewegen des Torbehanges werden die Lichtschranken sukzessive abgedeckt. Eine elektronische Steuerschaltung steuert die Aktivierung der Lichtschranken in Abhängigkeit von der Länge des abgerollten Torbehanges. Dadurch erfassen nur Lichtschranken, die von dem Torbehang nicht verdeckt werden, ein Hindernis.

Die Erfindung hat sich zur Aufgabe gestellt, derartige Lichtgittersicherungsvorrichtungen und damit versehene Tore zu verbessern, insbesondere hinsichtlich sicherer Erfassung von Hindernissen nahe am Torweg, einfacherer Herstellung und/oder einfacherer Montage. Außerdem soll ein besser und einfacher mit einem Lichtgitter abgesichertes Tor, insbesondere Sectionaltor geschaffen werden.

Zum zumindest teilweisen Lösen dieser Aufgabe schlägt die Erfindung den Gegenstand des unabhängiges Anspruchs vor. Vorteilhafte Ausgestaltungen der Erfindung sind Gegenstand der Unteransprüche.

Die Erfindung schafft eine Lichtgittereinrichtung zum Bilden eines Senders oder/und eines Empfängers einer Lichtgittersicherungsvorrichtung für ein automatisch angetriebenes mit Laufschienen versehenes Tor, mit einem Profilgehäuse zum Aufnehmen eines länglichen Lichtgitterelements, das zum Aussenden oder Empfangen einer Serie von Lichtstrahlen ausgebildet ist, wobei das Profilgehäuse wenigstens einen Anlagebereich aufweist, der zur Anlage des Profilgehäuses an einer Laufschiene des Tores in Richtung der Längserstreckung der Laufschiene ausgebildet ist. Wenigstens einer der folgenden Maßnahmen ist vorgesehen:
a) Der Anlagebereich weist einen Vorsprung zum formschlüssigen Erfassen der Laufschiene auf.
b) Die Lichtgittereinrichtung umfasst wenigstens ein Abstandshalter zum Beabstanden der Laufschienedes Tores von dem Profilgehäuse. Der Abstandshalter weist ein erstes Paar Kontaktbereiche mit einem ersten Abstand auf, wobei das erste Paar Kontaktbereiche mit dem Profilgehäuse und mit der Laufschiene verbindbar ist. Der Abstandshalter weist ein zweites Paar Kontaktbereiche mit einem zweiten Abstand auf, wobei das zweite Paar Kontaktbereiche mit dem Profilgehäuse und mit der Laufschiene verbindbar ist. Der erste Abstand ist kleiner als der zweite Abstand, um die Laufschiene und das Profilgehäuse entsprechend der Anordnung des Abstandshalters beabstandbar zu machen.
Es ist bevorzugt, dass die Lichtgittereinrichtung wenigstens einen Halter aufweist, der einen Profilbefestigungsbereich und einen Torbefestigungsbereich aufweist, wobei das Profilgehäuse einen länglichen Halteraufnahmebereich zum entlang der Profillängsrichtung verschiebbaren formschlüssigen Verankern des Profilbefestigungsbereichs des Halters auf-Es ist bevorzugt, dass der Profilbefestigungsbereich sich in einer ersten Richtung erstreckt, um sich an wenigstens zwei in Profillängsrichtung beabstandeten Punkten oder an wenigstens einer sich in Profillängsrichtung erstreckenden Linie in oder an dem Halteraufnahmebereich abzustützen, und/oder dass der Torbefestigungsbereich sich in einer zweiten Richtung erstreckt, um unterschiedliche Querabstände zu vorgegebenen Befestigungspunkten am Tor auszugleichen.

Es ist bevorzugt, dass der Halter ein Haltewinkel ist, wobei an einem ersten Schenkel der Profilbefestigungsbereich und an einem zweiten Schenkel der Torbefestigungsbereich angeordnet ist.

Es ist bevorzugt, dass der Profilbefestigungsbereich eine erste Schraubenaufnahmeöffnung und eine davon in Profillängsrichtung beabstandet angeordnete zweite Schraubenaufnahmeöffnung zur Aufnahme von Befestigungsschrauben aufweist.

Es ist bevorzugt, dass die Torbefestigungseinrichtung ein Langloch aufweist, das sich mit einer Richtungskomponente quer zu der Profillängsrichtung des Profilgehäuses erstreckt.

Es ist bevorzugt, dass das Profil des Profilgehäuses einen C-förmigen Hauptkanal zum Aufnehmen des Lichtgittersender- und/oder -empfängerelements aufweist, welcher C-förmiger Hauptkanal einen Lichtgitterspalt für die Lichtstrahlen des Lichtgitters aufweist.

Es ist bevorzugt, dass das Profil des Profilgehäuses wenigstens einen C-förmigen oder U-förmigen Seitenkanal aufweist, der den Halteraufnahmebereich bildet.

Es ist bevorzugt, dass das C-Profil oder U-Profil des Seitenkanals einen Befestigungsspalt aufweist, der durch den Halter oder ein Befestigungselement für den Halter zu durchgreifen ist, wobei der Befestigungsspalt sich a) an einem im Wesentlichen quer zu einer einen Lichtgitterspalt aufweisenden Vorderseite verlaufenden Seitenbereich oder b) seitlich zu dem Lichtgitterspalt auf der Vorderseite befindet.

Es ist bevorzugt, dass das Profilgehäuse relativ zu einer mittig zu einem Lichtgitterspalt verlaufenden Mittellängsebene symmetrisch ausgebildet ist.

Gemäß eines weiteren Aspekts schafft die Erfindung eine Lichtgittersicherungsvorrichtung zum Sichern eines automatisch angetriebenen Tores, enthaltend eine erste Lichtgittereinrichtung nach einem der voranstehenden Aspekte der Erfindung zur Befestigung an der einen Torseite und eine zweite Lichtgittereinrichtung nach einem der voranstehenden Aspekte der Erfindung zur Befestigung an der anderen Torseite.

Gemäß eines weiteren Aspekts schafft die Erfindung ein automatisch angetriebenes Tor mit einem in einer ersten und einer zweiten Laufschiene geführten automatisch angetriebenen Torflügel und einer Lichtgittereinrichtung nach einem der voranstehenden Aspekte der Erfindung und/oder einer Lichtgittersicherungsvorrichtung der voranstehend beschriebenen Art, wobei wenigstens ein Profilgehäuse der Lichtgittereinrichtung an wenigstens einer der Laufschienen kraft- oder formschlüssig, auf dieser Seite vorzugsweise allein durch den Kraft- oder Formschluss ohne zusätzliche Befestigungselemente gehalten, anliegend angeordnet ist, wobei wenigstens ein erster Halter der Lichtgittereinrichtung, vorzugsweise wenigstens ein erster und ein beabstandet angeordneter zweiter Halter, am der Laufschiene abgewandten Seitenbereich des Profilgehäuses in der Halteraufnahme eingreift und an vorgefertigten Befestigungsöffnungen in einer Zarge des Tores befestigt ist.

Alternativ ist es bevorzugt, dass wenigstens ein Profilgehäuse der Lichtgittereinrichtung mittelbar durch zwischen dem Profilgehäuse der Lichtgittereinrichtung und wenigstens einer Laufschiene eingefügte Abstandshalter an wenigstens einer der Laufschienen kraft- oder formschlüssig, auf dieser Seite vorzugsweise allein durch den Kraft- oder Formschluss ohne zusätzliche Befestigungselemente gehalten, anliegend angeordnet ist, wobei wenigstens ein erster Halter der Lichtgittereinrichtung, vorzugsweise wenigstens ein erster und ein beabstandet angeordneter zweiter Halter, am der Laufschiene abgewandten Seitenbereich des Profilgehäuses in der Halteraufnahme eingreift und an vorgefertigten Befestigungsöffnungen in einer Zarge des Tores befestigt ist.

Es ist bevorzugt, dass die wenigstens eine durch das Profilgehäuse erfasste Laufschiene sich schräg verlaufend erstreckt, wobei sich die durch die Mitte des Lichtgitterspaltes verlaufende Lichtebene sich auf der Mittelebene des in der Laufschiene geführten Teils des Torflügels erstreckt.

Vorzugsweise wird ein Lichtgittersystem für den Einsatz an Sectionaltoren vorgeschlagen. Bevorzugt sind wenigstens eines, einige oder alle der folgenden Merkmale oder Vorteile vorgesehen:
- das Lichtgitterprofil ist durch die Anlehnung an die Laufschiene des Tores zur Mitte der in der Laufschiene geführten Torlamelle ausgerichtet;
- das Lichtgitterprofil ist, z.B. durch Schraubverbindungen im Bereich zwischen Halter und Profilgehäuse, entlang der Laufschiene stufenlos verstellbar und axial gesichert;
- durch einen Vorsprung, z.B. eine am Lichtgitterprofil vorhandene Nase/Steg, ist das Verkippeln des Lichtgitterprofils ausgeschlossen;
- platzsparende Montage in der Torzage: beim geschlossenen Tor ist das Lichtgitter vor eventuellen Beschädigungen (Vandalismus etc.) geschützt;
- schnelle und sichere Montage;
- durch eine seitliche Verbindung des Lichtgitterprofils mit dem Halter (z.B. Befestigungswinkel) wird eine kleinstmögliche Höhe des Lichtgitters erreicht; und/oder
- für Befestigung des Lichtgitterprofils wird die an der Zarge vorhandene Lochgruppe benutzt.

Bei einer Variante der möglichen Befestigung des Lichtleiterprofils wird der Befestigungswinkel, z.B. von vorne, mittels einer gewindefurchenden Schraube am Lichtleiterprofil befestigt.

Vorteile dieser Variante können sein: sie ermöglicht eine maschinelle Befestigung (z.B. mit Akkuschrauber) des Befestigungswinkels am Lichtleiterprofil bei der nachträglicher Montage oder Justage.

Das Gehäuseprofil kann ein Metallprofil sein. Z.B. ist das Gehäuseprofil ein Leichtmetallprofil, z.B. Aluprofil. Bei einer anderen Ausgestaltung ist das Profilgehäuse aus einem Gehäuseprofil aus Kunststoff extrudiert.

Die gewünschte Länge der Lichtgittereinrichtung in Profillängsrichtung lässt sich durch Ablängen von einem Stück Profil auf die abzusichernde Torhöhe anpassen. Das Gehäuseprofil nimmt bevorzugt eine längliche Lichtgitter-Platine auf, die z.B. 1,8 bis 3 m, vorzugsweise etwa 2,5 m, lang ist. Die Platine kann eine Senderplatine oder eine Empfängerplatine sein. Es gibt auch die Möglichkeit, Sender und Empfänger an einer Platine oder in einem Profilgehäuse zu vereinigen und auf der Gegenseite des Tores eine Reflexionseinrichtung für die Lichtstrahlen vorzusehen.

Ein Vorteil der Kombination aus Halter auf einer Seite und Anlage an die Laufschiene auf der anderen Seite ist, dass das Einbringen von Befestigungselementen an den Haltern auf der einen Seite ausreicht und das Lichtgitter gleich richtig ausgerichtet ist. Z.B kann man auf einer Seite die Befestigung über den Halter durch Schrauben, vorzugsweise an bereits vorgefertigten Öffnungen an der Zarge, vorsehen, während auf der einen Seite ein Kraftschluss, vorzugsweise aber ein Formschluss, wie insbesondere ein Hintergriff hinter die Laufschiene vorgesehen wird. Z.B. weist das Profil des Gehäuses einen Vorsprung wie insbesondere eine Nase an einer hinteren und unteren Ecke auf, die unter Laufschiene greift.

Vorzugsweise sind mehrere Halter an der Halterbefestigungsaufnahme beabstandet vorgesehen. Eine Mehrfachbefestigung könnte z.B. drei oder mehr Halter umfassen, z.B. ein Halter unten, einer oder mehrere in der Mitte und einer oben.

Insbesondere wenn man das Profilgehäuse durch Kraft- oder Formschluss an der Laufschiene festklemmt und/oder axial sichert, z.B. durch Klemmschrauben oder sonstige Befestigungsschrauben oder Schraubbefestiger zwischen Halter und Profilgehäuse, gibt es keine Notwendigkeit einer Bodenabstützung. Man kann das Profilgehäuse hängend befestigen. Insbesondere bei Anlage an die Laufschiene kann man dennoch sicher eine sichere Ausrichtung erreichen. Legt man das Profilgehäuse an die z.B. vormontierte Laufschiene des industriell gefertigten Tores an, dann ist das Lichtgitter gleich richtig relativ zu dem durch die Laufschiene definierten Torweges positioniert. Die einfache und korrekte Montage wird noch durch eine Verwendung von industriell vorgefertigten Lochreihen an der Torzarge zur Befestigung des Halters unterstützt.

Als Klemmschrauben zwischen Halteraufnahme und Halter werden in einer besonders bevorzugten Ausführungsform einfach Sechskantschrauben verwendet. Den Sechskantkopf kann man in die als C-Profil an dem Seitenbereich des Profilgehäuses ausgeführte Halteraufnahme einführen. Bei entsprechender Wahl der relativen Abmessungen zwischen Schraubenkopf und C-Profil lassen sich die Schraubenköpfe zwar in dem C-Profil verschieben, jedoch nicht um die Schraubenachse verdrehen. So sitzt die Klemmschraube mit ihrem Kopf im C-Profil und ist dabei in der Lage stufenlos verstellbar und verdrehsicher.

Der Torbefestigungsbereich des vorzugsweise als Winkel ausgeführten Halters ist vorzugsweise ein Langloch. In der Zarge von auf dem Markt befindlichen Sectionaltoren der Hörmann KG gibt mehrere vorgfertigte Befestigunslöcher, die z.b. paarweise in einer Reihe vorgesehen sind. Für nähere Einzelheiten insbesondere zu dem Aufbau der Sectionaltore und dem möglichern Verlauf der Laufschienen wird auf die beigefügten Firmendruckschriften "Einbaudaten Industrie-Sectionaltore, Stand 01.07.2012", Prospekt "Industrie-Sectionaltore", Druck 06, 2011 und "Einbaudaten Industrie-Sectionaltor DPU", Stand 01.07.2012 der Hörmann KG, alle erhalten am 06.08.2012 über das Internet verwiesen.

Die Laufschienen dieser Sectionaltore verlaufen zumindest bei einigen Aufbauvarianten schräg; der Halter ist bevorzugt an den schrägen Laufschienenverlauf mit zu dem Profilbefestigungsbereich schräg verlaufenden Langloch angepasst. Wegen des Schrägverlaufs passt überdeckt das Langloch immer wenigstens eines der vorgefertigten Löcher, so dass hier eine Schraubbefestigung des Halters erfolgen kann.

Vorzugsweise sind das Profilgehäuse einerseits und/oder der Halter andererseits derart symmetrisch ausgebildet, dass jede Lichtschrankeneinrichtung sowohl links- als auch rechts am Tor verwendbar ist. Wird z.B. eine Lichtschrankensicherungsvorrichtung mit Lichtgittersender in einem ersten Profilgehäuse und mit Lichtgitterempfänger in einem zweiten Profilgehäuse vorgesehen, dann kann man vor Ort je nach Sonneneinstrahlungsbedingung oder sonstigen Umweltbedingungen wahlweise den Lichtsender rechts am Tor und den Lichtempfänger des Lichtgitters links am Tor anbringen oder umgekehrt.

Bei der Herstellung jedes Lichtgitterelements wird vorzugsweise derart vorgegangen, dass das Profilgehäuse bereitgestellt wird, dann die Platine (auch in Größenordnungen um 2,5m Länge) von einer offenen kleinen Seite aus eingeschoben wird und anschließend verbleibende Hohlräume mit geeignetem aushärtbaren Material, z.B. Gießharz, vergossen werden, um so die Platine zu schützen und zu fixieren.

Ausführungsbeispiele der Erfindung werden nachfolgend anhand der beigefügten Zeichnung näher erläutert. Darin zeigt:
- Fig. 1: einen Horizontalschnitt durch einen seitlichen Teilbereich eines automatisch angetriebenen Tores am Beispiel eines Sectionaltores mit Lichtgittersicherungsvorrichtung;
- Fig. 2: ein vergrößertes Detail der Darstellung von Fig. 1 zur Erläuterung der Anlage eines Profilgehäuses einer Lichtgittereinrichtung der Lichtgittersicherungsvorrichtung an einer Laufschiene des Tores;
- Fig. 3: eine seitliche Draufsicht von der Mitte der Toröffnung aus gesehen auf die Zarge des Tores mit Laufschiene und Lichtgittereinrichtung am unteren Bereich des Tores, nahe des Bodens;
- Fig. 4: eine perspektivische Darstellung des unteren seitlichen Eckbereichs des Tores, der in Fig. 1 im Horizontalschnitt gezeigt ist;
- Fig. 5: eine perspektivische schematische Darstellung einer ersten Ausführungsform der Lichtgittereinrichtung;
- Fig. 6: eine weitere perspektivische Darstellung der ersten Ausführungsform der Lichtgittereinrichtung;
- Fig. 7: eine perspektivische schematische Darstellung einer zweiten Ausführungsform der Lichtgittereinrichtung;
- Fig. 8: eine weitere perspektivische Darstellung der zweiten Ausführungsform der Lichtgittereinrichtung;
- Fig. 9: eine perspektivische schematische Darstellung einer dritten Ausführungsform der Lichtgittereinrichtu ng;
- Fig. 10: eine weitere perspektivische Darstellung der dritten Ausführungsform der Lichtgittereinrichtung;
- Fig. 11: eine schematische perspektivische Darstellung einer vierten Ausführungsform der Lichtgittereinrichtung;
- Fig. 12: eine perspektivische Teilansicht auf die Zarge des Tores mit Laufschiene und Lichtgittereinrichtung;
- Fig. 13: eine seitliche Draufsicht von der Mitte der Toröffnung aus gesehen auf die Zarge des Tores mit Laufschiene und Lichtgittereinrichtung am unteren Bereich des Tores, nahe des Bodens;
- Fig. 14: eine perspektivische schematische Darstellung einer fünften Ausführungsform der Lichtgittereinrichtung;
- Fig. 15: eine weitere perspektivische schematische Darstellung der fünften Ausführungsform der Lichtgittereinrichtung;
- Fig. 16: eine perspektivische schematische Darstellung einer Variante der fünften Ausführungsform der Lichtgittereinrichtung.

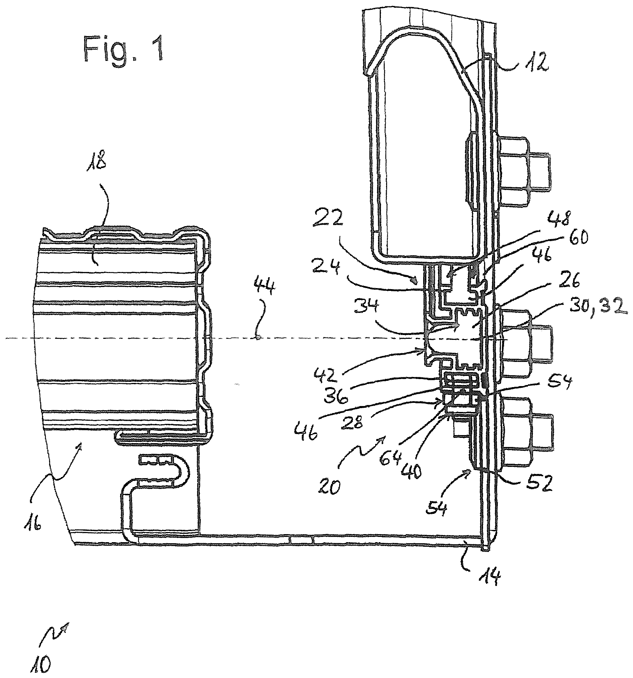

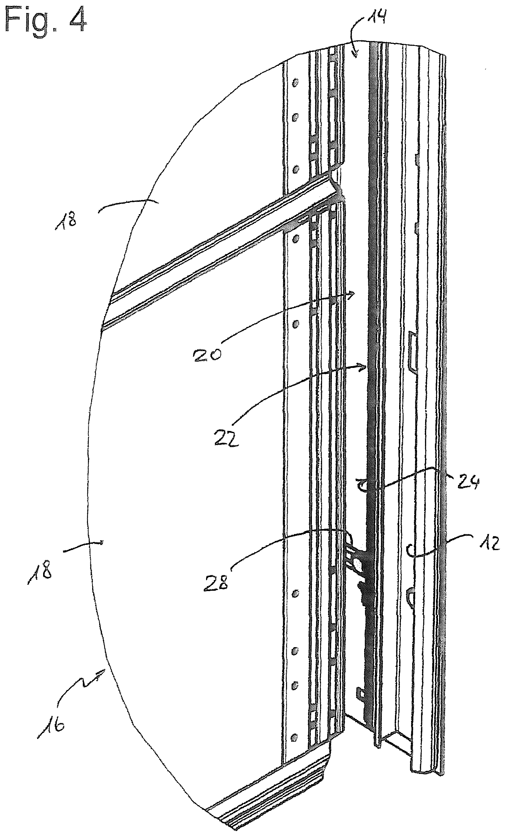

In den Figuren 1 bis 4 ist ein automatisch angetriebenes Tor 10, hier z.B. ein Sectionaltor, mit einem in Laufschienen 12 an einer Zarge 14 geführten und über einen nicht dargestellten Torantrieb automatisch angetriebenen Torflügel 16, insbesondere aufgebaut aus Torlamellen 18, gezeigt. In den Figuren ist nur ein seitlicher Bereich des Tores 10 dargestellt, beispielsweise ein rechter unterer Bereich. Der gegenüberliegende andere seitliche Bereich des Tores 10 ist entsprechend spiegelbildlich ausgebildet, so dass auf dessen Darstellung verzichtet werden kann. Für weitere Einzelheiten bezüglich des möglichen allgemeinen Aufbaus des Sectionaltores, den möglichen Verläufen und dem möglichen Aufbau der Laufschienen 12 sowie die Gestaltung der Zargen wird auf die beigefügten Druckschriften "Einbaudaten Industrie-Sectionaltore, Stand 01.07.2012", Prospekt "Industrie-Sectionaltore", Druck 06, 2011 und "Einbaudaten Industrie-Sectionaltor DPU", Stand 01.07.2012 der Hörmann KG verwiesen. Darin ist auch ein möglicher Torantrieb näher erläutert und gezeigt.

Anders als die bekannten Sectionaltore ist das in den beigefügten Zeichnungen dargestellte Tor 10 mit einer Lichtgittersicherungsvorrichtung 20 versehen, welche Lichtgittereinrichtungen 22 an den seitlichen Bereichen des Tores 10, angebracht im Innern der Zarge 14 aufweist. Eine der Lichtgittereinrichtungen 22 bildet einen Lichtgittersender, die andere einen Lichtgitterempfänger. Der Lichtgittersender sendet entlang der Erstreckung der Lichtgittereinrichtung 22 eine dichte Reihe von Lichtstrahlen aus, die von dem Lichtgitterempfänger empfangen werden. Wird bei einer Schließfahrt des Tores 10 durch ein im Torweg befindliches Hindernis wenigstens ein Lichtstrahl unterbrochen, dann wird ein Abschalt- und Reversiersignal an den Torantrieb gesendet, um die Schließfahrt zu stoppen und gegebenenfalls ein Stück zurückzufahren. Insoweit wirkt die Lichtgittersicherungsvorrichtung 20 wie eine dichte Reihe von in Torhöhenrichtung aufeinander folgenden Lichtschranken. Selbstverständlich wird diese Reihe von Lichtschranken je nach Lauf des Torflügels 16 streckenabhängig angesteuert und ausgewertet, so dass eine normale Unterbrechung durch den zufahrenden Torflügel 16 nicht als Hindernis gewertet wird. Hierzu weist die Lichtgittersicherungsvorrichtung 20 eine nicht näher dargestellte, mit der Steuerung des Torantriebs verbundene Lichtgitter-Steuer- und Auswerteeinrichtung auf. Diese kann als Teil der Platine wenigstens einer Lichtgittereinrichtung 22 oder als separate Rechnereinheit ausgebildet sein, die an die Torantriebssteuerung und die Platinen des Lichtgittersenders und des Lichtgitterempfängers angeschlossen ist.

Jede Lichtgittereinrichtung 22 weist ein Profilgehäuse 24, ein darin untergebrachtes Lichtgitterelement 26 und mehrere Halter 28 auf, von denen in den Figuren jeweils nur ein Halter 28 gezeigt ist.

Das Lichtgitterelement 26 ist beispielsweise ein Lichtgittersenderelement mit einer länglichen Senderplatine 30, auf der eine Reihe von Lichtdioden zum Absenden der Lichtstrahlen angeordnet sind, oder ein Lichtgitterempfängerelement mit einer länglichen Empfängerplatine 32 zum jeweils einzeln aufgelösten Empfangen der einzelnen Lichtstrahlen.

Das Profilgehäuse 24 weist einen C-förmig profilierten Hauptkanal 34, in dem das Lichtgitterelement 26 eingeschoben und mit Füllmasse vergossen ist, und einen Halteraufnahmebereich 36 auf, an dem der Halter 28 verschiebbar eingeführt und durch Befestigungsschrauben oder Schraubbefestiger 40, insbesondere Klemmschrauben, festgesetzt verankert ist.

Der C-förmige Hauptkanal 34 weist einen Lichtgitterspalt 42 auf, durch den die Lichtstrahlen gesendet bzw. empfangen werden. In Fig. 1 ist die durch die Mitte dieses Lichtgitterspaltes 42 verlaufende Mittelebene 44 durch das Profilgehäuse 24 dargestellt. Die Lichtstrahlen werden auf dieser Mittelebene 44 verlaufend gesendet und empfangen; insofern zeigt diese Mittelebene 44 das durch die Lichtstrahlen erzeugte Lichtgitter an.

Das Profilgehäuse 24 ist symmetrisch zu dieser Mittelebene 44 ausgebildet, so dass auf beiden Seiten je ein Halteraufnahmebereich 36 ausgebildet ist. Der Halteraufnahmebereich weist einen C-förmigen Seitenkanal 46 zur Aufnahme von Köpfen der Klemmschrauben 40 oder zur Aufnahme eines Eingriffsbereichs des Halters 28 auf.

Jede schmale Längsseite des Profilgehäuses 24 ist außerdem als Anlagebereich 48 ausgebildet, der sich im Wesentlichen entlang der gesamten Profilgehäuselänge an die Laufschiene 12 anliegend anschmiegen kann.

Das Profilgehäuse 24 wird so mit einer schmalen Längsseite an der Laufschiene 12 anliegend angeordnet und auf der anderen schmalen Längsseite mit dem Halter an vorgefertigten Öffnungen innerhalb der Zarge 14 befestigt.

Der Halter 28 ist als Haltewinkel mit einem ersten Schenkel 50 und einem zweiten Schenkel 52 ausgebildet. Der erste Schenkel 50 weist einen Profilbefestigungsbereich 54 zur Verankerung des Halters 28 an dem Halteraufnahmebereich 36 des Profilgehäuses 24 auf. Der zweite Schenkel 52 weist einen Torbefestigungsbereich 56 zur Befestigung des Halters 28 an Öffnungen in der Zarge 14 auf. Vorzugsweise weist der Torbefestigungsbereich 56 ein Langloch 58 auf.

Durch die entlang der Profillänge des Profilgehäuses 24 verschiebbare Verankerungsmöglichkeit und das Langloch 58 lässt sich der Torbefestigungsbereich 56 an einen schrägen Verlauf der Laufschienen 12 anpassen.

Aufgrund der Anlage des Profilgehäuses an der Laufschiene passt sich die Lichtebene, dargestellt durch die Mittelebene 44 stets an den Verlauf des Torweges an. Über die gesamte zu sichernde Strecke ist die Mittelebene 44 vorzugsweise derart angeordnet, dass sich diese Mittelebene durch die Mittelebene der an der Laufschiene 12 geführten Torlamellen 18 des Torflügels 16 erstreckt. Somit wird mit nur einer Lichtebene das Einfahren eines Gegenstandes von beiden Seiten des Tores mit gleicher Sicherheit überwacht.

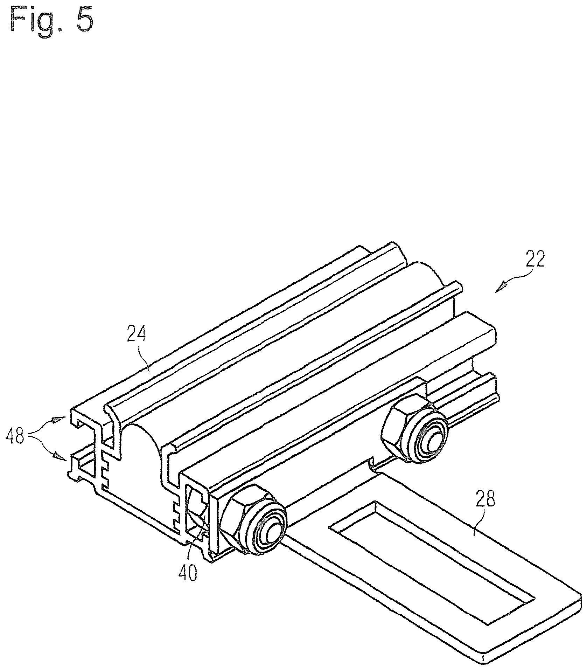

Im Folgenden werden unterschiedliche Ausführungsformen der Lichtgittereinrichtung 22 anhand der Darstellungen der Fig. 5 bis 11 näher erläutert.

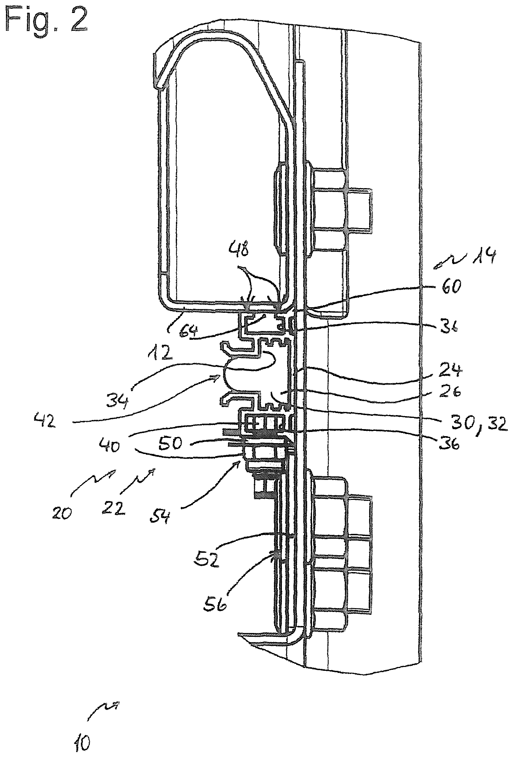

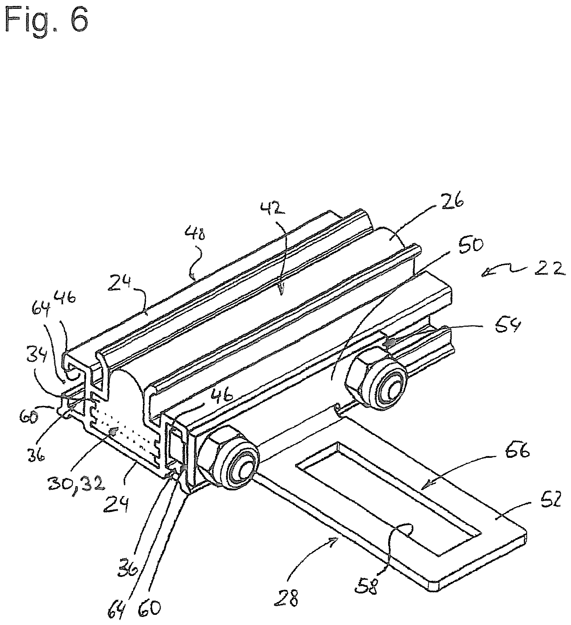

Bei der in den Fig. 5 und 6 dargestellten ersten Ausführungsform weist das Profilgehäuse 24 an den Eckkanten zwischen Basis (gegenüber Lichtgitterspalt) und schmalen Längsseiten einen Vorsprung 60, z.B. in Form einer Nase auf. Mit diesem Vorsprung 60 greift das Profilgehäuse 24, wie dies in Fig. 2 dargestellt ist, formschlüssig hinter die Laufschiene 12 ein.

Der erste Schenkel 50 des Halters 28 weist bei der ersten Ausführungsform voneinander in Profillängsrichtung beabstandete Bohrungen auf, durch die die Klemmschrauben 40 greifen, die mit ihren Sechskantköpfen verschiebbar aber verdrehsicher in den C-förmigen Seitenkanal 46 eingreifen und dort durch Anziehen von Muttern verklemmt sind. Auf diese Weise ist bei gelockerten Klemmschrauben 40 der Halter 28 entlang des Profilgehäuses 24 verschiebbar, bis eine passende vorgefertigte Öffnung in der Zarge 14 erreicht und die Lage daran angepasst ist.

Hierzu öffnet sich ein Befestigungsspalt 64 des Seitenkanals 46 auf der Seite des Profilgehäuses 24. Die Längsmittelebene durch den Befestigungsspalt 64 verläuft somit im Wesentlichen quer zu der Mittelebene 44. Dieser Befestigungsspalt 64 wird durch die Schafte der Klemmschrauben durchgriffen.

Durch Verklemmen der Klemmschrauben 40 ist das Profilgehäuse 24 axial gesichert; d.h. das Profilgehäuse 24 wird durch den am Tor befestigten Halter 28 auch gegen Verschieben in Profillängsrichtung gesichert.

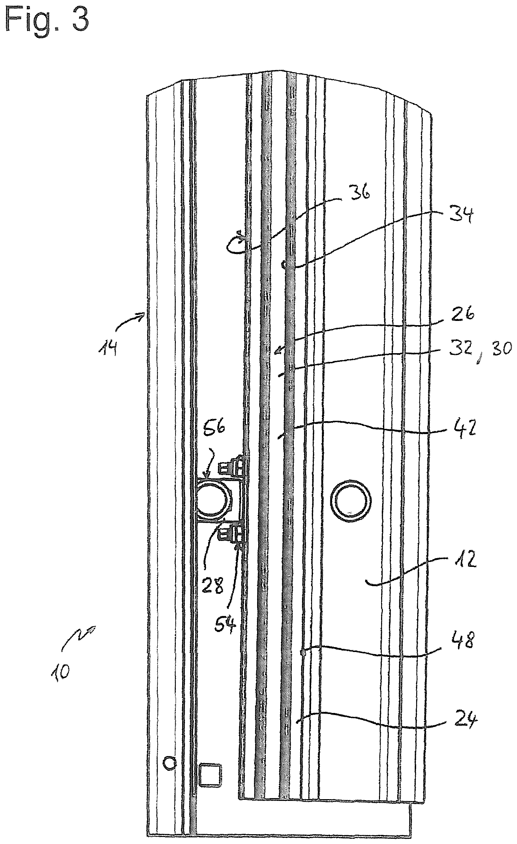

Das Profilgehäuse 24 muss daher nicht auf dem Boden aufstützen; in Fig. 3 ist dies durch den deutlichen Abstand zwischen Profilgehäuse 24 und Boden angedeutet.

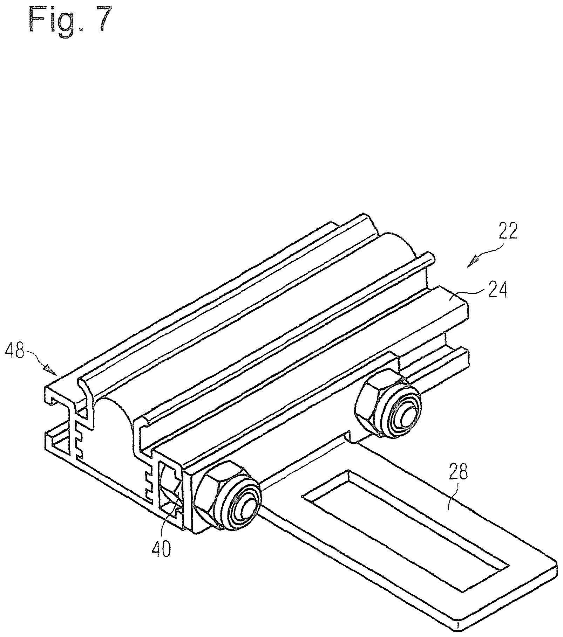

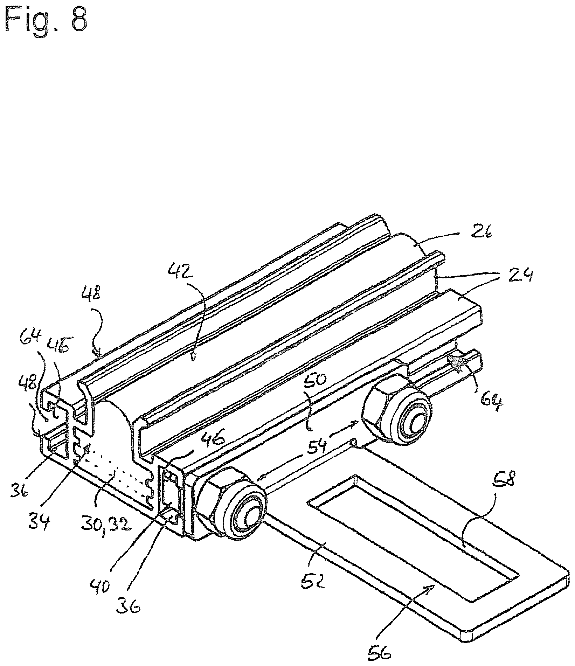

Die in den Fig. 7 und 8 dargestellte zweite Ausführungsform unterscheidet sich von der ersten Ausführungsform durch Weglassen des Vorsprungs 60, so dass die Anlage an die Laufschiene im Wesentlichen unter Kraftschluss erfolgt. Ansonsten ist die Ausbildung identisch zu der ersten Ausführungsform, so dass auf die obigen Ausführungen verwiesen werden kann.

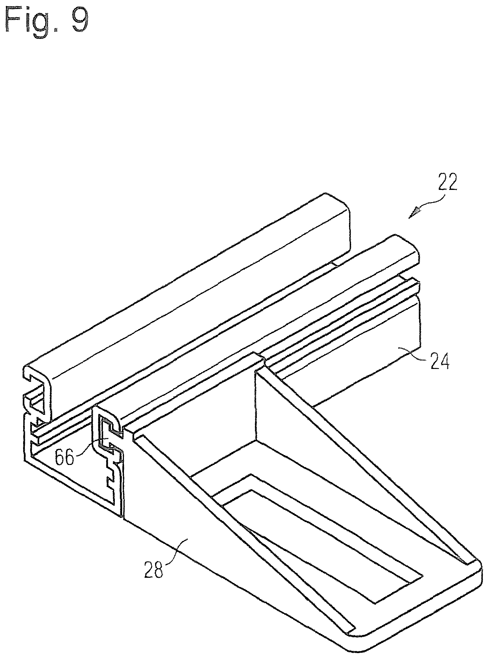

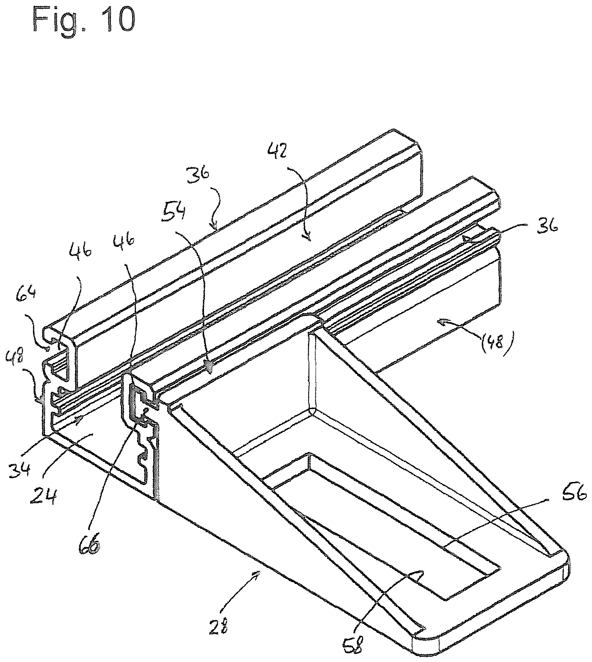

Bei der in den Fig. 9 und 10 dargestellten Ausführungsform ist der Haltewinkel z.B. aus Kunststoff so hergestellt, dass an dem ersten Schenkel ein Eingreifsbereich 66 ausgebildet ist, der in den C-förmigen Seitenkanal 46 des Profilgehäuses 24 hintergreifend eingreift. Dies stellt eine Variante ohne axiale Sicherung dar; man könnte dies Variante aber auch so abwandeln, dass man z.B. durch eine kleine in die T-Nut eingeschraubte Schraube eine axiale Sicherung vorsieht.

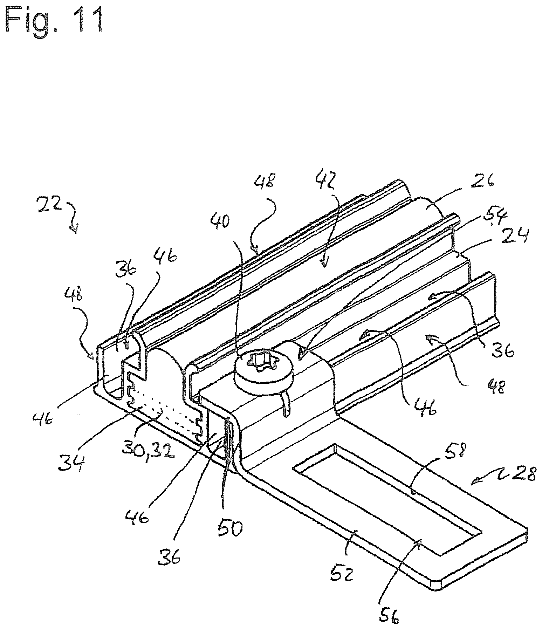

Bei der in Fig. 11 dargestellten Ausführungsform öffnet sich der Befestigungsspalt 64 des Halteraufnahmebereichs 36 nicht auf der schmalen Längsseite des Profilgehäuses 24, sondern an der Vorderseite, parallel zum Lichtgitterspalt 42. Somit kann man die Schraubbefestiger 40, hier z.B. ausgebildet als gewindefurchende Schrauben, auch von vorne handhaben und eine einfachere Montage erreichen. Der Seitenkanal 46 ist bei dieser Ausführungsform U-förmig und nicht C-förmig ausgebildet, der Formschluss wird insbesondere durch Gewindeeingriff der Schraubbefestiger 40 erreicht.

Bei einer Variante dieser Ausführungsform sind Gewindeflanken (wie bei einer Mutter) vorgesehen, die man mit an die Seitenflächen des hier z.B. U-förmig ausgebildeten Seitenkanals 46 extrudiert und dabei einen Höhenversatz mit halber Gewindesteigung vorsieht.

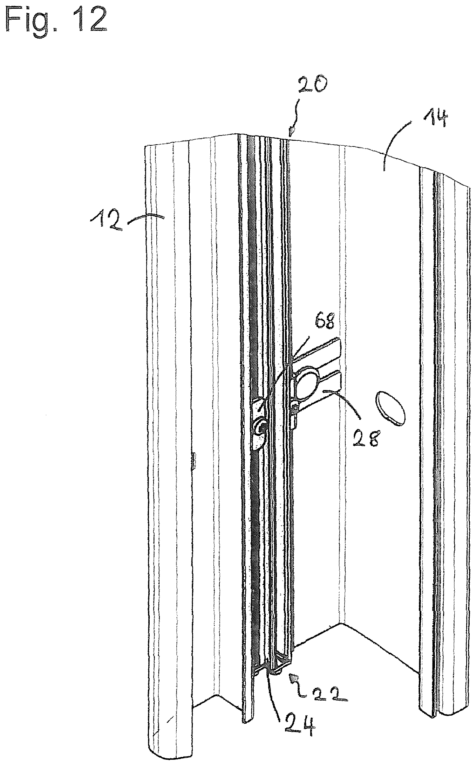

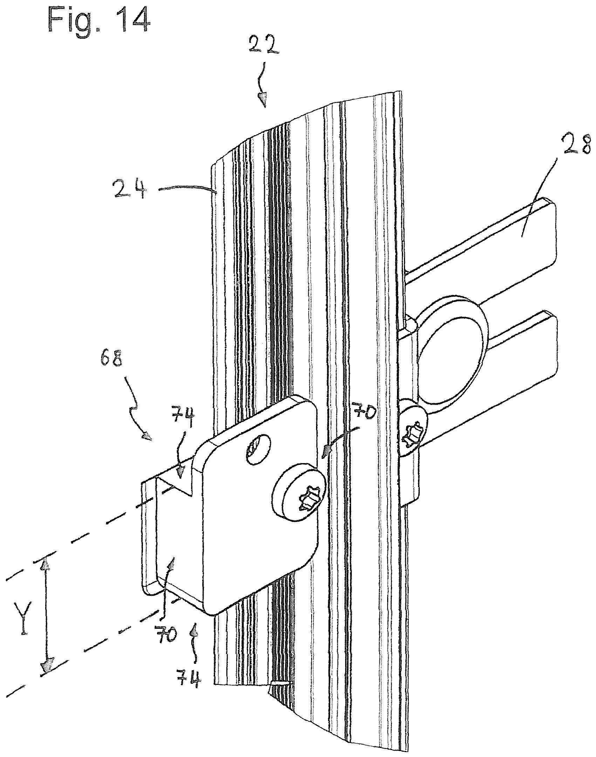

Wenn die Torlamellen 18 eine sehr große Dicke haben, wird die Lichtgittereinrichtung 22 von der Laufschiene 12 aus mit einem Abstand angeordnet, damit die Lichtstrahlen in der Mittelebene 44 verlaufen. Hierzu weist die in den Fig. 12 bis 16 gezeigte Ausführungsform zusätzlich mehrere Abstandshalter 68 zum Beabstanden der Laufschiene 12 von dem Profilgehäuse 24 auf, von denen nur jeweils ein Abstandshalter 68 in den Figuren gezeigt ist.

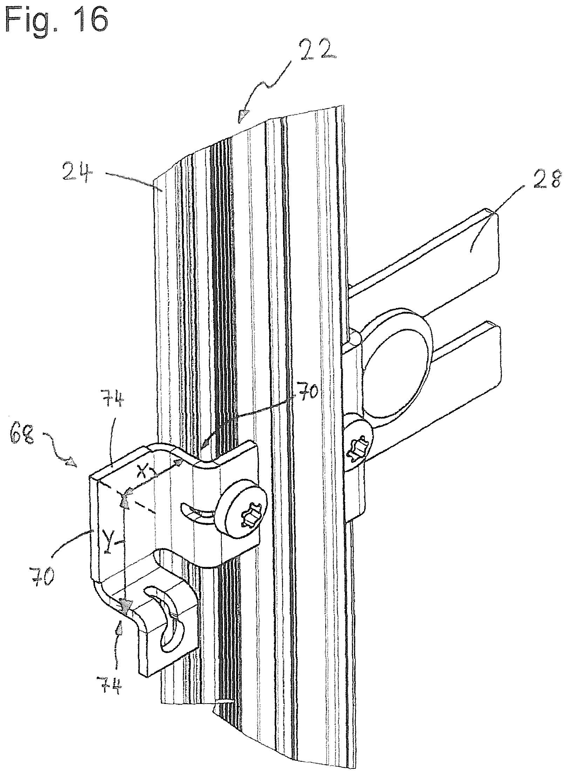

Die Abstandshalter 68 sind beispielsweise aus Kunststoff (Fig. 12 bis 15) oder Metall (Fig. 16) gefertigt. Jeder Abstandshalter weist ein erstes Paar einander gegenüberliegender Kontaktbereiche 70 und ein zweites Paar einander gegenüberliegender Kontaktbereiche 74 auf. Jedes Paar Kontaktbereiche 70, 74 ist so ausgestaltet, dass es mit dem Profilgehäuse 24 und mit der Laufschiene 12 verbindbar ist. Zwei Kontaktflächen des ersten Paares Kontaktbereiche 70 haben einen Abstand X voneinander und zwei Kontaktflächen des zweiten Paares Kontaktbereiche 74 haben einen Abstand Y voneinander. Der Abstand X ist kleiner als der Abstand Y. Der Abstand X hat eine Länge zwischen 8 mm und 18 mm, insbesondere 13,5 mm. Der Abstand Y hat eine Länge zwischen 25mm und 35mm, insbesondere 30mm. Dadurch wird die Laufschiene 12 von dem Profilgehäuse 24 entsprechend der Anordnung des Abstandshalters 68 beabstandbar, je nachdem ob der Abstandshalter 68 mit der Richtung des Abstandes X oder mit der Richtung des Abstandes Y parallel zu der Richtung der Laufschiene 12 angeordnet ist.

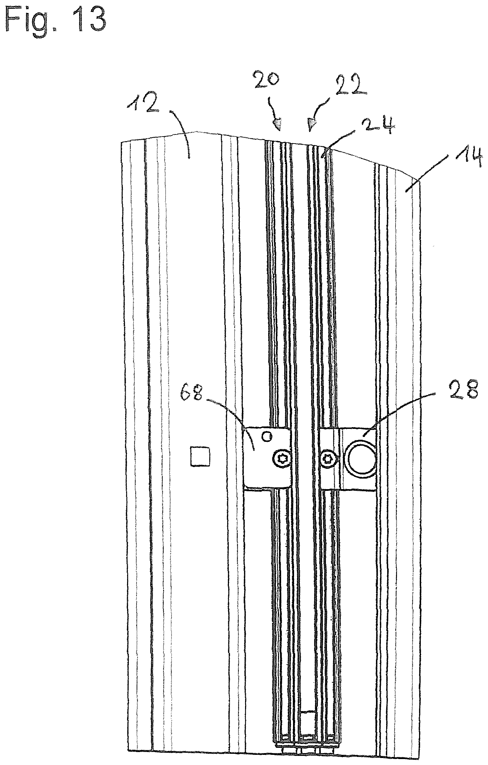

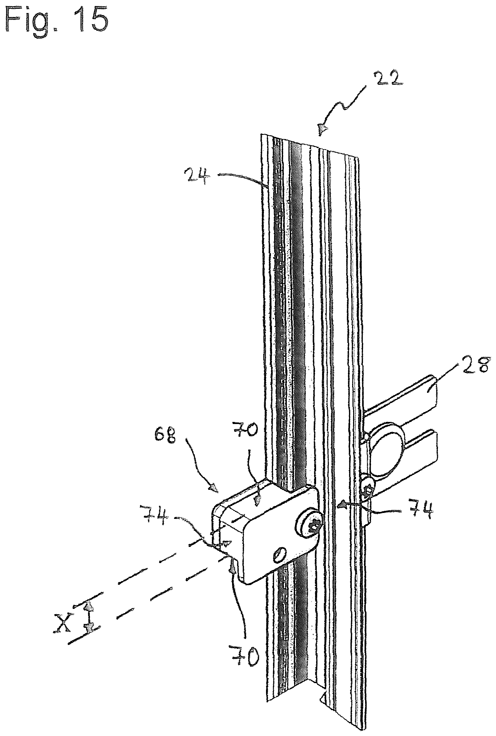

Der Abstandshalter 68 ist, wie in den Fig. 12 und 13, zwischen die Laufschiene 12 und das Profilgehäuse 24 eingefügt und der Halter 28 ist im Profilbefestigungsbereich 54 dem Abstandshalter 68 gegenüberliegend vorgesehen. Der Abstandshalter ist im Torbefestigungsbereich 54 am Profilgehäuse 24 befestigt. Eine Kontaktfläche des Abstandshalters 68 ist dem Torbefestigungsbereich 54 zugewandt während eine andere Kontaktfläche des Abstandshalters 68 der Laufschiene 12 zugewandt ist. Der Abstandshalter 68 ist so angeordnet, dass er kraft- oder formschlüssig mit der Laufschiene 12 verbunden ist und vorzugsweise ohne zusätzliche Befestigungselemente gehalten ist. Durch die kraft- oder formschlüssig mit der Laufschiene 12 verbundenen und an dem Torbefestigungsbereich 54 befestigten Abstandshalter 68 ist das Profilgehäuse 24 mittelbar an der Laufschiene 12 kraft- oder formschlüssig anliegend angeordnet. Das Profilgehäuse 24 hat in diesem Fall einen Abstand X von der Laufschiene 12. Ist der Abstandshalter 68, wie in Fig. 15 gezeigt, um 90° gegenüber den in den Fig. 12 bis 14 und 16 gezeigten Fällen gedreht, so hat das Profilgehäuse 24 einen Abstand Y von der Laufschiene 12.

Somit kann mit einem Abstandshalter 68 wahlweise ein erster oder ein zweiter vorgegebener Abstand eingehalten werden. Durch das Hinzufügen von mehreren Abstandshaltern zu den Profilgehäuses kann somit die Lichtgittereinrichtung 22 passend zu insgesamt drei Torpaneeldicken angepasst montiert werden. Bei dünneren Torblättern erfolgt die Anbringung ohne Abstandshalter 68. Bei mitteldicken Torblättern erfolgt die Anbringung mit Abstandshalter 68 in einer ersten Orientierung. Bei dicken Torblättern erfolgt die Anbringung mit Abstandshalter 68 in einer zweiten Orientierung.

In anderen hier nicht näher dargestellten Ausführungsformen sind zur Anpassung an weitere Torblattdicken mehrere Sätze jeweils unterschiedlich ausgebildeter Abstandshalter vorgesehen.

Bei dem in den Figuren 1 bis 4 dargestellten Sectionaltor verläuft die Laufschiene 12 schräg, durch die Anlage des Profilgehäuses 24 verläuft auch das Lichtgitter entsprechend schräg, so dass immer die Mitte des Torflügels 16 überwacht wird. Somit wird der Verlauf des Lichtgitters durch Anlage an die Laufschiene 12 immer entsprechend an den Torverlauf angepasst. Dadurch hat man auch bei unterschiedlichen Laufschienenverläufen, wie sie in den oben genannten Firmendruckschriften der Hörmann KG erwähnt sind, immer das passend ausgerichtete Lichtgitter. Diese Ausführung eignet sich beispielsweise für 40 mm breite Torlamellen 18.

Sind die Torlamellen 18 beispielsweise 67 mm breit, ist der Abstandshalter 68 bevorzugt wie in den Fig. 12 bis 14 und 16 angeordnet und die Länge des Abstandes X beträgt 13,5 mm. Ist die Breite der Torlamellen 18 100 mm, ist der Abstandhalter 68 bevorzugt wie in Fig. 15 dargestellt angeordnet und die Länge des Abstandes Y beträgt 30 mm. Das Profilgehäuse 24 ist mittelbar durch die zwischen Profilgehäuse 24 und der schrägen Laufschiene 12 eingefügten Abstandshalter 68 an die Laufschiene 12 anliegend angeordnet. Die Abstandshalter 68 sind vorzugsweise an dem Profilgehäuse 24 festgeschraubt. Das Lichtgitter verläuft dann ebenso schräg, wie oben beschrieben, und die Mitte des breiteren Torflügels 16 wird überwacht.

### Bezugszeichenliste:

- 10: Tor
- 12: Laufschiene
- 14: Zarge
- 16: Torflügel
- 18: Torlamelle
- 20: Lichtgittersicherungsvorrichtung
- 22: Lichtgittereinrichtung
- 24: Profilgehäuse
- 26: Lichtgitterelement
- 28: Halter
- 30: Senderplatine
- 32: Empfängerplatine
- 34: Hauptkanal
- 36: Halteraufnahmebereich
- 40: Schraubbefestiger (z.B. Klemmschrauben oder gewindefurchende Schrauben)
- 42: Lichtgitterspalt
- 44: Mittelebene
- 46: Seitenkanal (z.B. C-förmig oder U-förmig)
- 48: Anlagebereich
- 50: erster Schenkel
- 52: zweiter Schenkel
- 54: Profilbefestigungsbereich
- 56: Torbefestigungsbereich
- 58: Langloch
- 60: Vorsprung
- 64: Befestigungsspalt
- 66: Eingreifsbereich
- 68: Abstandshalter
- 70: erstes Paar Kontaktbereiche
- 74: zweites Paar Kontaktbereiche
- X: erster Abstand
- Y: zweiter Abstand

## Patentansprüche

1. Lichtgittereinrichtung (22) zum Bilden eines Senders oder/und eines Empfängers einer Lichtgittersicherungsvorrichtung (20) für ein automatisch angetriebenes mit Laufschienen (12) versehenes Tor (10), mit einem Profilgehäuse (24) zum Aufnehmen eines länglichen Lichtgitterelements (26), das zum Aussenden oder Empfangen einer Serie von Lichtstrahlen ausgebildet ist, wobei das Profilgehäuse (24) wenigstens einen Anlagebereich (48) aufweist, der zur Anlage des Profilgehäuses (24) an einer Laufschiene (12) des Tores (10) in Richtung der Längserstreckung der Laufschiene (12) ausgebildet ist
**dadurch gekennzeichnet, dass**
a) der Anlagebereich (48) einen Vorsprung (60) zum formschlüssigen Erfassen der Laufschiene (12) aufweist und/oder
b) die Lichtgittereinrichtung (22) weiter wenigstens einen Abstandshalter (68) zum Beabstanden der Laufschiene (12) von dem Profilgehäuse (24) umfasst, wobei der Abstandshalter (68) ein erstes Paar Kontaktbereiche (70) mit einem ersten Abstand (X) aufweist, wobei das erste Paar Kontaktbereiche (70) mit dem Profilgehäuse (24) und mit der Laufschiene (12) verbindbar ist, dass der Abstandshalter (68) ein zweites Paar Kontaktbereiche (74) mit einem zweiten Abstand (Y) aufweist, wobei das zweite Paar Kontaktbereiche (74) mit dem Profilgehäuse (24) und mit der Laufschiene (12) verbindbar ist, wobei der erste Abstand (X) kleiner als der zweite Abstand (Y) ist, um die Laufschiene (12) und das Profilgehäuse (24) entsprechend der Anordnung des Abstandshalters (68) beabstandbar zu machen.

2. Lichtgittereinrichtung nach Anspruch 1,
**gekennzeichnet durch** einen Halter (28), der einen Profilbefestigungsbereich (54) und einen Torbefestigungsbereich (56) aufweist, wobei das Profilgehäuse (24) einen länglichen Halteraufnahmebereich (36) zum entlang der Profillängsrichtung verschiebbaren Verankern des Profilbefestigungsbereichs (54) des Halters (28) aufweist.

3. Lichtgittereinrichtung nach Anspruch 2,
**dadurch gekennzeichnet, dass** der Profilbefestigungsbereich (54) sich in einer ersten Richtung erstreckt, um sich an wenigstens zwei in Profillängsrichtung beabstandeten Punkten oder an wenigstens einer sich in Profillängsrichtung erstreckenden Linie in oder an dem Halteraufnahmebereich (36) abzustützen, und/oder dass der Torbefestigungsbereich (56) sich in einer zweiten Richtung erstreckt, um unterschiedliche Querabstände zu vorgegebenen Befestigungspunkten am Tor (10) auszugleichen.

4. Lichtgittereinrichtung nach einem der voranstehenden Ansprüche,
**dadurch gekennzeichnet, dass** der Halter (28) ein Haltewinkel ist, wobei an einem ersten Schenkel (50) der Profilbefestigungsbereich und an einem zweiten Schenkel (52) der Torbefestigungsbereich (56) angeordnet ist.

5. Lichtgittereinrichtung nach einem der voranstehenden Ansprüche,
**dadurch gekennzeichnet, dass** der Profilbefestigungsbereich (54) eine erste Schraubenaufnahmeöffnung und eine davon in Profillängsrichtung beabstandet angeordnete zweite Schraubenaufnahmeöffnung zur Aufnahme von Schraubbefestigern (40) aufweist.

6. Lichtgittereinrichtung nach einem der voranstehenden Ansprüche,
**dadurch gekennzeichnet, dass** die Torbefestigungseinrichtung (56) ein Langloch (58) aufweist, das sich mit einer Richtungskomponente quer zu der Profillängsrichtung erstreckt.

7. Lichtgittereinrichtung nach einem der voranstehenden Ansprüche,
**dadurch gekennzeichnet, dass** das Profil des Profilgehäuses (24) einen C-förmigen Hauptkanal (34) zum Aufnehmen des Lichtgitterelements (26) aufweist, welcher C-förmiger Hauptkanal einen Lichtgitterspalt (42) für die Lichtstrahlen des Lichtgitters aufweist.

8. Lichtgittereinrichtung nach einem der voranstehenden Ansprüche,
**dadurch gekennzeichnet, dass** das Profil des Profilgehäuses (24) wenigstens einen C-förmigen oder U-förmigen Seitenkanal (46) aufweist, der den Halteraufnahmebereich (36) bildet.

9. Lichtgittereinrichtung nach Anspruch 8,
**dadurch gekennzeichnet,dass** das C-Profil oder U-Profil des Seitenkanals (46) einen Befestigungsspalt (64) aufweist, der durch den Halter (28) oder ein Befestigungselement (40) für den Halter (28) zu durchgreifen ist, wobei der Befestigungsspalt (64) sich
a) an einem Seitenbereich, der im Wesentlichen quer zu einer einen Lichtgitterspalt (42) aufweisenden Vorderseite verläuft, oder
b) seitlich neben dem Lichtgitterspalt (42) auf der Vorderseite befindet.

10. Lichtgittereinrichtung nach einem der voranstehenden Ansprüche,
**dadurch gekennzeichnet, dass** das Profilgehäuse (24) relativ zu einer mittig zu einem Lichtgitterspalt (42) verlaufenden Mittellängsebene (44) symmetrisch ausgebildet ist.

11. Lichtgittersicherungsvorrichtung (20) zum Sichern eines automatisch angetriebenen Tores (10), enthaltend eine erste Lichtgittereinrichtung (22) nach einem der voranstehenden Ansprüche zur Befestigung an der einen Torseite und eine zweite Lichtgittereinrichtung (22) nach einem der voranstehenden Ansprüche zur Befestigung an der anderen Torseite.

12. Automatisch angetriebenes Tor (10) mit einem in einer ersten und einer zweiten Laufschiene (12) geführten automatisch angetriebenen Torflügel und wenigstens einer Lichtgittereinrichtung (22) nach einem der Ansprüche 1 bis 10, die an wenigstens einer der vorzugsweise schräg verlaufenden Laufschienen anliegend befestigt ist, und/oder einer Lichtgittersicherungsvorrichtung (20) nach Anspruch 11.

13. Tor nach Anspruch 12,
**dadurch gekennzeichnet, dass** wenigstens ein Profilgehäuse (24) der Lichtgittereinrichtung (22) an wenigstens einer der Laufschienen (12) kraft- oder formschlüssig anliegend angeordnet ist, wobei wenigstens ein erster Halter (28) der Lichtgittereinrichtung (22) am der Laufschiene (12) abgewandten Seitenbereich des Profilgehäuses (24) in einem Halteraufnahmebereich (36) des Profilgehäuses (24) eingreift und an vorgefertigten Befestigungsöffnungen im Innern einer Zarge (14) des Tores (10) befestigt ist.

14. Tor nach Anspruch 12,
**dadurch gekennzeichnet, dass** wenigstens ein Profilgehäuse (24) der Lichtgittereinrichtung (22) nach einem der Ansprüche 1 bis 10 mittelbar durch zwischen dem Profilgehäuse (24) der Lichtgittereinrichtung (22) nach einem der Ansprüche 1 bis 10 und wenigstens einer Laufschiene (12) eingefügte Abstandshalter (68) an wenigstens einer der Laufschienen (12) kraft- oder formschlüssig anliegend angeordnet ist, wobei wenigstens ein erster Halter (28) der Lichtgittereinrichtung (22) am der Laufschiene (12) abgewandten Seitenbereich des Profilgehäuses (24) in einem Halteraufnahmebereich (36) des Profilgehäuses (24) eingreift und an vorgefertigten Befestigungsöffnungen im Innern einer Zarge (14) des Tores (10) befestigt ist.

15. Tor nach einem der Ansprüche 12 bis 14,
**dadurch gekennzeichnet, dass** die wenigstens eine durch das Profilgehäuse (24) erfasste Laufschiene (12) sich schräg verlaufend erstreckt, wobei sich die durch die Mitte des Lichtgitterspaltes (42) verlaufende Lichtebene sich auf der Mittelebene (44) des in der Laufschiene (12) schräg geführten Teil des Torflügels (16) erstreckt.

## Claims

1. Light grid unit (22) for forming a transmitter and/or a receiver of a light grid securing device (20) for an automatically driven gate (10) provided with rails (12), comprising a profiled housing (24) for receiving an elongate light grid element (26) configured to emit or receive a series of light rays, wherein the profiled housing (24) at least comprises an abutment portion (48) configured for the profiled housing (24) to abut against a rail (12) of the gate (10) in the direction of the longitudinal extent of the rail (12),
**characterized in that**
a) the abutment portion (48) includes a projection (60) for frictionally capturing the rail (12) and/or
b) the light grid unit (22) further comprises at least one spacer (68) for spacing the rail (12) from the profiled housing (24), wherein the spacer (68) comprises a first pair of contact areas (70) with a first spacing (X), wherein the first pair of contact areas (70) is connectable to the profiled housing (24) and to the rail (12), that the spacer (68) comprises a second pair of contact areas (74) with a second spacing (Y), wherein the second pair of contact areas (74) is connectable to the profiled housing (24) and to the rail (12), wherein the first spacing (X) is smaller than the second spacing (Y) to render the rail (12) and the profiled housing (24) spaceable corresponding to the arrangement of the spacer (68).

2. Light grid unit according to claim 1,
**characterized by** a holder (28) having a profile fixing portion (54) and a gate fixing portion (56), wherein the profiled housing (24) has an elongate holder receiving portion (36) for anchoring the profile fixing portion (54) of the holder (28) so as to be displaceable along the longitudinal direction of the profile.

3. Light grid unit according to claim 2,
**characterized in that** the profile fixing portion (54) extends in a first direction to be supported in or at the holder receiving portion (36) at at least two points spaced in the profile longitudinal direction or at at least one line extending in the profile longitudinal direction and/or that the gate fixing portion (56) extends in a second direction to compensate different transverse spacings from predetermined fixing points on the gate (10).

4. Light grid unit according to any of the preceding claims,
**characterized in that** the holder (28) is an angle bracket, wherein the profile fixing portion is arranged on a first leg (50) and the gate fixing portion (56) is arranged on a second leg (52).

5. Light grid unit according to any of the preceding claims,
**characterized in that** the profile fixing portion (54) has a first screw receiving opening and second screw receiving opening spaced from the first screw receiving opening in the profile longitudinal direction for receiving screw fasteners (40).

6. Light grid unit according to any of the preceding claims,
**characterized in that** the gate fixing device (56) includes an oblong hole (58) that extends with one directional component transversely to the profile longitudinal direction.

7. Light grid unit according to any of the preceding claims,
**characterized in that** the profile of the profiled housing (24) comprises a C-shaped main channel (34) for receiving the light grid element (26), the C-shaped main channel including a light grid gap (42) for the light rays of the light grid.

8. Light grid unit according to any of the preceding claims,
**characterized in that** the profile of the profiled housing (24) at least comprises a C-shaped or U-shaped side channel (46) forming the holder receiving portion (36).

9. Light grid unit according to claim 8,
**characterized in that** the C-profile or the U-profile of the side channel (46) includes a fixing gap (64) to be penetrated by the holder (28) or by a fixing element (40) for the holder (28), wherein the fixing gap (64) is located
a) at a lateral area which substantially extends transversely to a front side that includes a light grid gap (42) or
b) laterally adjacent to the light grid gap (42) on the front side.

10. Light grid unit according to any of the preceding claims,
**characterized in that** the profiled housing (24) is formed symmetrically to a longitudinal center plane (44) that extends centrally with respect to a light grid gap (42).

11. Light grid securing unit (20) for securing an automatically driven gate (10), comprising a first light grid unit (22) according to any of the preceding claims for fixing to one side of the gate and a second light grid unit (22) according to any of the preceding claims for fixing to the other side of the gate.

12. Automatically driven gate (10), comprising an automatically driven gate wing guided in a first and in a second rail (12), and at least one light grid unit (22) according to any of the claims 1 to 10, which is fixed to and in abutment with at least one of the rails preferably extending obliquely, and/or a light grid securing unit (20) according to claim 11.

13. Gate according to claim 12,
**characterized in that** at least one profiled housing (24) of the light grid device (22) is arranged so as to abut against at least one rail (12) in a frictional or form-fitting manner, wherein at least a first holder (28) of the light grid unit (22) engages a holder receiving portion (36) of the profiled housing (24) at the lateral region of the profiled housing (24) facing away from the rail (12) and is fixed to prefabricated fixing openings in the interior of a jamb (14) of the gate (10).

14. Gate according to claim 12,
**characterized in that** at least one profiled housing (24) of the light grid unit (22) according to any of the claims 1 to 10 is arranged so as to abut against at least one rail (12) in a frictional or form-fitting manner indirectly by means of the spacers (68) interposed between the profile housing (24) of the light grid unit (22) according to any of the claims 1 to 10 and at least one rail (12), wherein at least a first holder (28) of the light grid unit (22) engages a holder receiving portion (36) of the profiled housing (24) at the lateral region of the profiled housing (24) facing away from the rail (12) and is fixed to prefabricated fixing openings in the interior of a jamb (14) of the gate (10).

15. Gate according to any of the claims 12 to 14,
**characterized in that** at least one rail (12) captured by the profiled housing (24) extends obliquely, wherein the light plane passing through the center of the light grid gap (42) extends on the central plane (44) of the part of the gate wing (16) guided obliquely in the rail (12).

## Revendications

1. Dispositif à grille de lumière (22) pour former un émetteur et/ou un récepteur d'un dispositif de sécurité à grille de lumière (20) pour un portail à entraînement automatique (10) muni des rails de roulement (12), comportant un boîtier profilé (24) pour loger un élément de grille de lumière allongé (26) conçu pour émettre et recevoir une série de rayons lumineux, ledit boîtier profilé (24) présentant au moins une zone d'appui (48) conçu pour le boîtier profilé s'appuyer contre un rail de roulement (12) du portail (10) dans le sens de l'étendue longitudinale du rail de roulement (12),
**caractérisé en ce que**
a) la zone d'appui (48) présente une saillie (60) pour saisir le rail de roulement (12) par complémentarité de formes, et/ou
b) le dispositif à grille de lumière (22) en outre comprend au moins un espaceur (68) pour éloigner le rail de roulement (12) du boîtier profilé (24), dans laquelle l'espaceur (68) comprend une première paire de zones de contact (70) avec une première distance (X), dans laquelle la première paire de zones de contact (70) peut être connectée au boîtier profilé (24) et au rail de roulement (12), et **caractérisée en ce que** l'espaceur (68) présente une deuxième paire de zones de contact (74) avec une deuxième distance (Y), la deuxième paire de zones de contact (74) étant connectable au boîtier profilé (24) et au rail de roulement (12), la première distance (X) étant inférieure à la deuxième distance (Y), pour rendre le rail de roulement (12) et le boîtier profilé (24) apte à être espacés conformément à l'arrangement de l'espaceur (68).

2. Dispositif à grille de lumière selon la revendication 1,
**caractérisé par** un support (28) comportant une partie de fixation de profil (54) et une partie de fixation de portail (56), le boîtier profilé (24) comportant une partie de logement de support (36) pour l'ancrage coulissant de la partie de fixation de profil (54) du support (28) dans le sens longitudinal du profil.

3. Dispositif à grille de lumière selon la revendication 2,
**caractérisé en ce que** la partie de fixation de profil (54) s'étend dans une première direction pour s'appuyer sur au moins deux points espacés dans le sens longitudinal du profil ou sur au moins une ligne s'étendant dans le sens longitudinal du profil ou sur une zone de logement de support (38), et/ou **en ce que** la partie de fixation de portail (56) s'étend dans une deuxième direction pour compenser des distance transversales différentes des points de fixation prédéterminés sur le portail (10).

4. Dispositif à grille de lumière selon l'une des revendications précédentes, **caractérisé en ce que** le support (28) est une cornière de maintien, sur une première branche (50) de laquelle est disposée la partie de fixation de profil et sur une deuxième branche (52) de laquelle est disposée la partie de fixation de portail (56).

5. Dispositif à grille de lumière selon l'une des revendications précédentes, **caractérisé en ce que** la partie de fixation de profil (54) présente une première ouverture de réception de vis et une deuxième ouverture de réception de vis espacée de la première ouverture de réception de vis dans le sens longitudinal du profil, pour recevoir des éléments de fixation à vis (40).

6. Dispositif à grille de lumière selon l'une des revendications précédentes, **caractérisé en ce que** la partie de fixation de portail (56) présente un trou oblong (58) s'étendant avec une composante directionnelle transversalement à la direction longitudinale.

7. Dispositif à grille de lumière selon l'une des revendications précédentes, **caractérisé en ce que** le profil du boîtier profilé (24) présente un canal principal (34) en forme de C pour recevoir l'élément de grille de lumière (26), ledit canal principal en forme de C comprenant une fente de grille de lumière (42) pour des rayons lumineux de la grille de lumière.

8. Dispositif à grille de lumière selon l'une des revendications précédentes, **caractérisé en ce que** le profil du boîtier profilé (24) comprend au moins un canal latéral (46) en forme de C ou en forme d'U formant la zone de logement de support (36).

9. Dispositif à grille de lumière selon la revendication 8,
**caractérisé en ce que** le profil en forme de C ou le profil en forme d'U du canal latéral (46) présentent une fente de fixation (64) destinée à être traversant par le support (28) ou par un élément de fixation (40) pour le support (28), ladite fente de fixation (64) se trouvant:
a) sur une partie latérale s'étendant sensiblement transversalement à une face frontale présentant une fente de grille de lumière ou
b) latéralement à côté de la fente de grille de lumière (42).

10. Dispositif à grille de lumière selon l'une des revendications précédentes, **caractérisée en ce que** le boîtier profilé (24) est réalisée de manière symétrique par rapport à un plan longitudinal médian (44) s'étendant centralement par rapport à une fente de grille de lumière (42).

11. Dispositif de sécurité à grille de lumière pour sécuriser un portail à entraînement automatique (10), comprenant un premier dispositif à grille de lumière (22) selon l'une des revendications précédentes, pour la fixation sur l'un des côtés du portail et une deuxième dispositif à grille de lumière (22) selon l'une des revendications précédentes, pour la fixation sur l'autre côté du portail.

12. Portail à entraînement automatique (10) avec un vantail de porte entraîné de manière automatique et guidé dans un premier et dans un deuxième rail de roulement (12) et avec au moins un dispositif à grille de lumière (22) selon l'une des revendications 1 à 10, fixé de manière adjacente sur l'un au moins des rails de roulement s'étendant préférentiellement obliquement, et/ou avec un dispositif de sécurité à grille de lumière (20) selon la revendication 11.

13. Portail selon la revendication 12,
**caractérisé en ce qu'**un boîtier profilé (24) du dispositif à grille de lumière (22) est disposé par adhérence ou par engagement positif sur au moins un des rails de roulement (12), au moins un premier support (28) du dispositif à grille de lumière (22) s'engageant dans une zone de logement de support (36) sur la partie latérale du boîtier profilé (24) détournée du rail de roulement (12) et étant fixé sur une ouverture de fixation préfabriquée à l'intérieur d'un dormant (14) du portail (10).

14. Portail selon la revendication 12,
**caractérisé en ce qu'**au moins un boîtier profilé (24) du dispositif à grille de lumière (22) selon l'une des revendications 1 à 10 est disposé par adhérence ou par complémentarité de formes sur au moins un des rails de roulement (12) au moyen des espaceurs (68) intercalés entre le boîtier profilé (24) du dispositif à grille de lumière (22) selon l'une des revendications 1 à 10 et au moins un des rails de roulement (12), dans lequel au moins un premier support (28) du dispositif à grille de lumière s'engage dans une zone de logement de support (36) du boîtier profilé et est fixé sur des ouvertures de fixation préfabriquées à l'intérieur d'un dormant (14) du portail (10).

15. Portail selon la revendication 12 à 14,
**caractérisé en ce que** ledit au moins un rail de roulement (12) saisi par le boîtier profilé (24) s'étend obliquement, le plan de lumière s'étendant à travers le centre de la fente de grille de lumière (42) s'étend sur le plan central (44) de la partie du vantail de portail (16) guidée obliquement dans le rail de roulement (12).
